# EUROPÄISCHE PATENTSCHRIFT

(11) **EP 2 203 991 B1**
(45) Veröffentlichungstag und Bekanntmachung des Hinweises auf die Patenterteilung: **23.03.2011**
(21) Anmeldenummer: 08842303.3
(22) Anmeldetag: 22.10.2008
(51) Int. Cl.: H04B 7/26, H04W 84/18

(54) **FUNKKOMMUNIKATIONSSYSTEM, KOORDINATORGERÄT UND KOMMUNIKATIONSENDGERÄT**
RADIO COMMUNICATION SYSTEM, COORDINATOR UNIT AND COMMUNICATIONS TERMINAL
SYSTÈME DE RADIOCOMMUNICATION, APPAREIL DE COORDINATION ET TERMINAL DE COMMUNICATION

(30) Priorität: 23.10.2007 DE 102007051605
(43) Veröffentlichungstag der Anmeldung: 07.07.2010
(73) Patentinhaber: Siemens Aktiengesellschaft, 80333 München (DE)
(72) Erfinder: SINN, Ulrich, 91056 Erlangen (DE); WEILER, Christoph, 75015 Bretten (DE)
(86) Internationale Anmeldenummer: PCT/EP2008/064313
(87) Internationale Veröffentlichungsnummer: WO 2009/053403

(56) Entgegenhaltungen:
- EP-A- 0 948 149
- WO-A-2005/099156
- MASATOSHI SEKINE ET AL: "An Energy-Efficient MAC Protocol with Lightweight and Adaptive Scheduling for Wireless Sensor Networks" RADIO AND WIRELESS SYMPOSIUM, 2007 IEEE, IEEE, PISCATAWAY, NJ, USA, 1. Januar 2007 (2007-01-01), Seiten 161-164, XP031080057 ISBN: 978-1-4244-0444-5

## Beschreibung

Die Erfindung betrifft ein Funkkommunikationssystem, ein Koordinatorgerät und ein Kommunikationsendgerät.

Dem Fachmann sind aus der Kommunikationstechnologie, Netzwerktechnologie und Automatisierungstechnologie eine Vielzahl von Verfahren bekannt, wann und wie Kommunikationsendgeräte Zugriff auf das Datenübertragungsmedium erhalten. Der Zugriff wird in vielen Fällen von einem Koordinatorgerät, in der englischsprachigen Literatur auch als Master bekannt, den Kommunikationsendgeräten, in der englischen Literatur auch als Slaves bekannt, zugewiesen. Das Koordinatorgerät hat als einziger Teilnehmer im Netzwerk das Recht unaufgefordert auf das Datenübertragungsmedium zuzugreifen. Die Kommunikationsendgeräte müssen auf die Zuweisung vom Koordinatorgerät warten, bevor sie auf das Datenübertragungsmedium zugreifen dürfen. Die aus der englischsprachigen Literatur auch als Master/Slave-Verfahren bekannte Lösung wird auch in vielen Bussystemen der Automatisierungstechnik eingesetzt.

Seit neuestem werden in der Automatisierungstechnik nicht nur "drahtgebundene" Bussysteme für die Datenkommunikation zwischen dem Koordinatorgerät und den Kommunikationsendgeräten eingesetzt, sondern es werden auch drahtlose Netzwerke aufgebaut, sogenannte Wireless Sensor Actor Networks. Der Zugriff der einzelnen Kommunikationsendgeräte auf die Funkressource wird wiederum vom Koordinatorgerät zugeteilt. Ein wichtiges Verfahren hinsichtlich des Zugriffs auf die Funkressource ist das sogenannte Zeitmultiplexverfahren, bei dem die Zeit in einzelne Zeitrahmen einheitlicher Länge unterteilt ist, die wiederum in determinierte Zeitschlitze gleicher Länge unterteilt sind. Der Zugriff auf die Funkressource ist einem Kommunikationsendgerät nur innerhalb des zugeteilten Zeitschlitzes oder der zugeteilten Zeitschlitze innerhalb eines Zeitrahmens möglich. Die zeitliche Position der einzelnen Zeitschlitze in aufeinanderfolgenden Zeitrahmen ist in Bezug auf den Beginn des jeweiligen Zeitrahmens determiniert.

Die Zuweisung eines in aufeinanderfolgenden Zeitrahmen wiederkehrenden Zeitschlitzes vom Koordinatorgerät an ein Kommunikationsendgerät erlaubt eine deterministische Übertragung von Daten. Deterministische Übertragung soll so verstanden werden, dass die Daten innerhalb einer vorab bestimmten und bekannten Zeit von einer Datenquelle (dem Sender) zum Ziel, d.h. der Datensenke (dem Empfänger) transportiert werden.

Die Datenübertragung der Daten soll zudem innerhalb einer kurzen Latenzzeit = Verzögerungszeit erfolgen. Das soll im Weiteren die Zeit sein, innerhalb der nach dem Auftreten eines Ereignisses, welches durch ein Kommunikationsendgerät registriert wird, dieses Ereignis dem Koordinatorgerät gemeldet wird. Bei dem beschriebenen Zeitmultiplexverfahren mit Zeitrahmen und einem für ein Kommunikationsendgerät festgelegten Zeitschlitz wird die Latenzzeit wesentlich durch die Länge des festgelegten Zeitschlitzes und die Länge des Zeitrahmens bestimmt. Heutige technische Anforderungen erfordern Latenzzeiten von wenigen Millisekunden.

Eine Beispiel eines Sensor-Netzwerkes ist aus dem Document "An energy-efficient Mac Protocol with lightweight and adaptive scheduling for wireless sensor Networms" (01-01-2007) bekannt.

Es ist die Aufgabe der vorliegenden Erfindung ein Funkkommunikationssystem zu entwickeln, welches bei geringer Latenzzeit und deterministischer Übertragung eine optimierte Steuerung des Zugriffs auf die Funkressource ermöglicht.

Die Aufgabe wird erfindungsgemäß durch ein Funkkommunikationssystem umfassend ein Koordinatorgerät und mindestens ein Kommunikationsendgerät gelöst, in dem der Zugriff auf die Funkressource nach dem Zeitmultiplexverfahren strukturiert ist,
a) wobei die Funkressource in determinierte Zeitrahmen unterteilt ist,
b) wobei das Koordinatorgerät dem mindestens einen Kommunikationsendgerät mindestens einen Nutzdatenübertragungszeitschlitz zuweist, dessen zeitliche Position in aufeinanderfolgenden Zeitrahmen in Bezug auf den Beginn des jeweiligen Zeitrahmens determiniert ist,
c) wobei die einzelnen Zeitrahmen dergestalt strukturiert sind, dass sie einen Synchronisierungszeitschlitz, ein oder mehrere Nutzdatenübertragungszeitschlitze gleicher Länge und einen weiteren dynamischen Zeitschlitz beinhalten.

Die Aufgabe wird erfindungsgemäß des Weiteren durch ein für ein Funkkommunikationssystem ausgebildetes Koordinatorgerät gelöst.

Die Aufgabe wird erfindungsgemäß des Weiteren durch ein für ein Funkkommunikationssystem ausgebildetes Kommunikationsendgerät gelöst.

Das erfindungsgemäße Funkkommunikationssystem, das erfindungsgemäße Koordinatorgerät und das erfindungsgemäße Kommunikationsendgerät ermöglichen bei geringer Latenzzeit und deterministischer Übertragung der Daten eine optimierte Steuerung des Zugriffs auf die Funkressource.

Weiterbildungen der Erfindung ergeben sich aus den Unteransprüchen.

In vorteilhafter Weise wird das Funkkommunikationssystem dadurch weitergebildet, dass das Koordinatorgerät dem mindestens einen Kommunikationsendgerät in einer Nutzdatenübertragungsbetriebsart mittels einer im Synchronisierungszeitschlitz übertragenen Synchronisierungsmeldung mitteilt, in welcher Richtung die Funkkommunikation zwischen dem Koordinatorgerät und dem mindestens einen Kommunikationsendgerät innerhalb dieses Zeitrahmens erfolgt. Dadurch kann das Koordinatorgerät entweder Nutzdaten von dem mindestens einen Kommunikationsendgerät empfangen oder das mindestens eine Kommunikationsendgerät wird für die unmittelbare Parametrierung durch das Koordinatorgerät vorbereitet.

In weiterhin vorteilhafter Weise wird das Funkkommunikationssystem gemäß des vorigen Absatzes dadurch weitergebildet, dass die Synchronisierungsmeldung als Richtung die Abwärtsrichtung vom Koordinatorgerät zu dem mindestens einen Kommunikationsendgerät definiert, und daraufhin das mindestens eine Kommunikationsendgerät und das Koordinatorgerät (KG) in eine Koordinatorparametrierbetriebsart wechseln, in der das mindestens eine Kommunikationsendgerät parametriert wird. Aus verschiedenen Möglichkeiten der Parametrierung des Kommunikationsendgerätes wird hier die unmittelbare Parametrierung durch das Koordinatorgerät vollzogen.

In weiterhin vorteilhafter Weise wird das Funkkommunikationssystem dadurch weitergebildet, dass das Koordinatorgerät dem mindestens einen Kommunikationsendgerät in der Nutzdatenübertragungsbetriebsart mittels der im Synchronisierungszeitschlitz übertragenen Synchronisierungsmeldung mitteilt, ob eine Bestätigung empfangener Meldungen erforderlich ist. Dadurch kann die Kommunikationssicherheit erhöht werden und die Latenzzeit verkürzt werden.

In weiterhin vorteilhafter Weise wird das Funkkommunikationssystem dadurch weitergebildet, dass der dynamische Zeitschlitz eines Zeitrahmens in mehrere Unterzeitschlitze gleicher Länge unterteilt ist. Dadurch kann eine Vielzahl von weiteren Geräten, ohne das zwischen ihnen eine Störung der Datenkommunikation auftritt, mit dem Koordinatorgerät kommunizieren.

Das Funkkommunikationssystem wird in vorteilhafter Weise dadurch weitergebildet, dass der dynamische Zeitschlitz von einem Kommunikationsendgerät benutzbar ist, dem kein Nutzdatenübertragungszeitschlitz zugewiesen ist, und / oder von einem Zusatzgerät benutzbar ist. Somit kann der dynamische Zeitschlitz auf unterschiedliche Weise für eine Datenkommunikation mit dem Koordinatorgerät verwendet werden. Er dient entweder weiteren Kommunikationsendgeräten zur Nutzdatenübertragung zum Koordinatorgerät oder einem Zusatzgerät, mit dem weitere Kommunikationsendgeräte vom Zusatzgerät parametriert werden.

Das Funkkommunikationssystem des vorigen Absatzes wird in vorteilhafter Weise dadurch weitergebildet, dass das Zusatzgerät dem Koordinatorgerät mittels einer Zusatzgerätparametrierungsmeldung signalisiert, dass es das mindestens eine Kommunikationsendgerät in einer Ad-hoc-Parametrierbetriebsart parametrieren will und das Koordinatorgerät daraufhin das mindestens eine Kommunikationsendgerät mittels der Synchronisierungsmeldung zwingt, in die Ad-hoc-Parametrierbetriebsart zu wechseln. Auf diese Weise wird die Parametrierung der Kommunikationsendgeräte durch das Zusatzgerät durchgeführt, wobei Funkkanäle verwendet werden, die die Datenkommunikation zwischen dem Koordinatorgerät und den nicht vom Zusatzgerät parametrierten Kommunikationsendgeräten nicht stören.

Das Funkkommunikationssystem des vorigen Absatzes wird in vorteilhafter Weise dadurch weitergebildet, dass das Zusatzgerät dem mindestens einen Kommunikationsendgerät mittels einer Zusatzgerätparametrierungsbeendigungsmeldung signalisiert, dass es die Ad-hoc-Parametrierbetriebsart verlassen soll, wodurch das mindestens eine Kommunikationsendgerät gezwungen wird, sich wiederum auf die Synchronisierungsmeldung zu synchronisieren, um mit dem Koordinatorgerät zu kommunizieren. Somit kann das vom Zusatzgerät parametrierte Kommunikationsendgerät wieder zügig an der Datenkommunikation mit dem Koordinatorgerät teilnehmen.

Das Funkkommunikationssystem wird in vorteilhafter Weise dadurch weitergebildet, dass das mindestens eine Kommunikationsendgerät in der Nutzdatenübertragungsbetriebsart im energiesparenden Schlafmodus verweilt und sich erst nach Auftreten eines Ereignisses auf die Synchronisierungsmeldung synchronisiert und im Zeitrahmen dieser Synchronisierungsmeldung eine Meldung im zugewiesenen Nutzdatenübertragungszeitschlitz an das Koordinatorgerät versendet. Somit wird ein energiesparender Betrieb des Funkkommunikationssystem bei geringer Latenzzeit und deterministischer Übertragung ermöglicht.

Das Funkkommunikationssystem wird in vorteilhafter Weise dadurch weitergebildet, dass das mindestens eine Kommunikationsendgerät in der Nutzdatenübertragungsbetriebsart in vorbestimmten Zeitrahmen in einem zugewiesenen Nutzdatenübertragungszeitschlitz eine Statusmeldung an das Koordinatorgerät versendet. Dadurch kann ein Ausfall eines Kommunikationsendgerätes vom Koordinatorgerät zügig entdeckt und weitere Maßnahmen zur Wiederherstellung der Datenkommunikation zwischen diesem Kommunikationsendgerät und dem Koordinatorgerät getroffen werden.

Das Funkkommunikationssystem wird in vorteilhafter Weise dadurch weitergebildet, dass ein oder mehrere der folgenden Größen parametrierbar sind:
- Zeitdauer der Synchronisierungszeitschlitze,
- Anzahl der dem mindestens einen Kommunikationsendgerät zugewiesenen Nutzdatenübertragungszeitschlitze innerhalb eines Zeitrahmens,
- Anzahl des mindestens einen Kommunikationsendgerätes,
- Zeitdauer der Nutzdatenübertragungszeitschlitze,
- Zeitdauer des dynamischen Zeitschlitzes und die Anzahl und Zeitdauer der Unterzeitschlitze,
- Verschlüsselungserfordernis der zu übertragenen Meldungen.

Auf diese Weise kann die Datenübertragung zwischen einer Vielzahl von Kommunikationsendgeräten und einem Koordinatorgerät auf vielfältige Weise und angepasst auf spezielle Erfordernisse realisiert werden.

Weitere Vorteile der Erfindung ergeben sich aus der folgenden Beschreibung, welche in Verbindung mit den beigefügten Zeichnungen die Erfindung anhand von fünf Ausführungsbeispielen erläutert.

Dabei zeigt in schematischer Darstellung die
FIG 1 ein Funkkommunikationssystem umfassend ein Koordinatorgerät, drei Kommunikationsendgeräte und ein Zusatzgerät, und die
FIG 2a eine Strukturierung eines Zeitrahmens umfassend einen Synchronisierungszeitschlitz, drei Nutzdatenübertragungszeitschlitze und einen dynamischen Zeitschlitz, welcher als monolithischer Bereich strukturiert ist, und die
FIG 2b die Figur 2a erweitert darin, dass der dynamische Zeitschlitz in zwei Unterzeitschlitze unterteilt ist, und die
FIG 3 eine Datenkommunikation zwischen einem Koordinatorgerät und drei Kommunikationsendgeräten in einer Nutzdatenübertragungsbetriebsart und einer Koordinatorparametrierbetriebsart, und die
FIG 4 eine Datenkommunikation zwischen einem Koordinatorgerät, einem Kommunikationsendgerät und einem Zusatzgerät in einer Nutzdatenübertragungsbetriebsart und einer Ad-hoc-Parametrierbetriebsart, und die
FIG 5 eine Strukturierung einer in einem Synchronisierungszeitschlitz übertragenen Synchronisierungsmeldung.

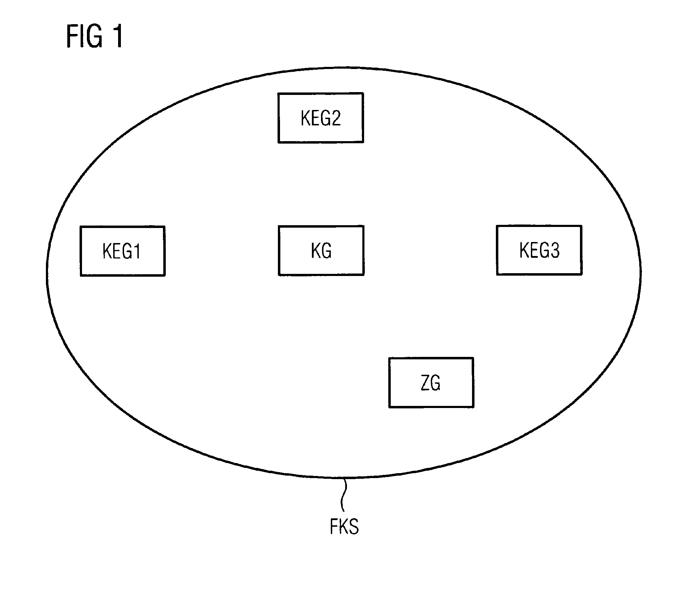

Die Figur 1 zeigt ein Funkkommunikationssystem FKS umfassend ein Koordinatorgerät KG, drei Kommunikationsendgeräte KEG1, KEG2, KEG3 und ein Zusatzgerät ZG. Das Koordinatorgerät stellt auch die Datenkommunikation zur übergeordneten Netzwerkinfrastruktur her. Das Funkkommunikationssystem FKS ist beispielsweise als Drahtloses Sensor / Aktor Netzwerk (Wireless Sensor Actor Network) ausgebildet. Die Kommunikationsendgeräte KEG1, KEG2, KEG3 können also als Sensoren oder Aktoren ausgebildet sein. Selbstverständlich kann ein solches Funkkommunikationssystem FKS auch weitere Kommunikationsendgeräte oder Zusatzgeräte umfassen (hier nicht gezeigt).

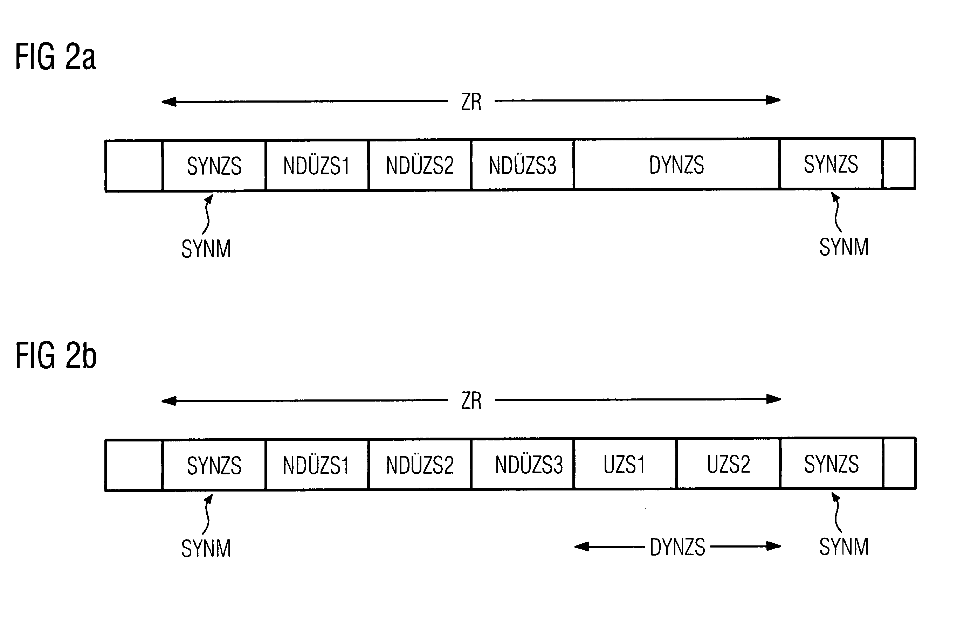

Die Figur 2a zeigt eine Strukturierung eines Zeitrahmens ZR umfassend einen dynamischen Zeitschlitz DYNZS, der als monolithischer Bereich strukturiert ist. Der Zeitrahmen ZR beginnt mit einem Synchronisierungszeitschlitz SYNZS, drei aufeinanderfolgenden Nutzdatenübertragungszeitschlitzen NDÜZS1, NDÜZS2, NDÜZS3, an die sich der dynamische Zeitschlitz DYNZS anschließt. Der folgende Zeitrahmen, von dem nur der Synchronisierungszeitschlitz SYNZS gezeigt ist, schließt sich an den gezeigten vollständigen Zeitrahmen ZR an. In dem gezeigten vollständigen Zeitrahmen ZR wird in dem Synchronisierungszeitschlitz SYNZS die Synchronisierungsmeldung SYNM von dem Koordinatorgerät KG an die Kommunikationsendgeräte KEG1, KEG2, KEG3, die eine Datenkommunikation mit dem Koordinatorgerät KG unterhalten, übertragen. Diese Kommunikationsendgeräte KEG1, KEG2, KEG3 sollten sich auf die in dem Synchronisierungszeitschlitz SYNZS des Zeitrahmens ZR enthaltene Synchronisierungsmeldung SYNM aufsynchronisieren, aber auf jeden Fall deren Meldungsinhalt umsetzen. Der Nutzdatenübertragungszeitschlitz NDÜZS1 ist dem Kommunikationsendgerät KEG1, der Nutzdatenübertragungszeitschlitz NDÜZS2 ist dem Kommunikationsendgerät KEG2 und der Nutzdatenübertragungszeitschlitz NDÜZS3 ist dem Kommunikationsendgerät KEG3 zugewiesen. Die Zeitdauer des Synchronisierungszeitschlitzes SYNZS, die Anzahl der den Kommunikationsendgeräten KEG1, KEG2, KEG3 innerhalb eines Zeitrahmens zugewiesenen Nutzdatenübertragungszeitschlitze NDÜZS1, NDÜZS2, NDÜZS3, die Anzahl der an der Datenkommunikation teilnehmenden Kommunikationsendgeräte KEG1, KEG2, KEG3, die Zeitdauer der Nutzdatenübertragungszeitschlitze NDÜZS1, NDÜZS2, NDÜZS3, die Zeitdauer des dynamischen Zeitschlitzes DYNZS und die Anzahl und Zeitdauer der Unterzeitschlitze UZS1, UZS2 ist parametrierbar und wird vor Inbetriebnahme des Funkkommunikationssystems FKS durch eine in das Koordinatorgerät KG geladene Software bestimmt. Außerdem ist durch das Koordinatorgerät KG parametrierbar, ob die Datenkommunikation von/zu den Kommunikationsendgeräten KEG1, KEG2, KEG3 verschlüsselt oder unverschlüsselt erfolgen soll.

Die Parametrierung wird in großem Maße durch die Auslegung des Funkkommunikationssystems FKS bestimmt und beispielsweise durch folgende Größen beeinflusst. Anzahl der an der Datenkommunikation teilnehmenden Kommunikationsendgeräte KEG1, KEG2, KEG3, einzuhaltende maximale Latenzzeit, Größe der von/zu den Kommunikationsendgeräten KEG1, KEG2, KEG3 zu übertragenen Meldungen, Anzahl der Zusatzgeräte ZG etc..

Der dynamische Zeitschlitz DYNZS kann von weiteren Kommunikationsendgeräten benutzt werden, denen kein Nutzdatenübertragungszeitschlitz NDÜZS1, NDÜZS2, NDÜZS3 von dem Koordinatorgerät KG für die zyklische Datenkommunikation mit dem Koordinatorgerät KG zugeordnet wurde. Vor der Benutzung des dynamischen Zeitschlitzes DYNZS durch ein Kommunikationsendgerät muss sich dieses auf die Synchronisierungsmeldung SYNM im dem dynamischen Zeitschlitz DYNZS vorangegangenen Synchronisierungszeitschlitz SYNZS synchronisieren. Insbesondere kann der dynamische Zeitschlitz DYNZS auch benutzt werden, wenn die zu übertragenen Datenpakete zu lang sind, um innerhalb eines Nutzdatenübertragungszeitschlitzes NDÜZS1, NDÜZS2, NDÜZS3 übertragen zu werden.

Auch kann der dynamische Zeitschlitz DYNZS von einem Zusatzgerät ZG benutzt werden, welches zur Parametrierung der Kommunikationsendgeräte KEG1, KEG2, KEG3 dient, was in einem späteren Abschnitt eingehender erläutert wird.

Datenkollisionen zwischen verschiedenen Kommunikationsendgeräten oder dem Zusatzgerät ZG in dem dynamischen Zeitschlitz DYNZS werden durch dem Fachmann bekannte Stauauflösungsmechanismen, in der englischsprachigen Literatur auch als Backoffmechanismen bekannt, gelöst, bei denen eine wiederholte Aussendung von Datenpaketen zu späteren zufällig gewählten Zeitpunkten erfolgt oder eine Priorisierung von Datenpaketen bestimmter Kommunikationsendgeräte vorgesehen ist.

Die Figur 2b unterscheidet sich von der Figur 2a nur insofern, dass der dynamische Zeitschlitz DYNZS im Zeitrahmen ZR in zwei Unterzeitschlitze UZS1, UZS2 unterteilt ist. Dadurch können zwei weitere Kommunikationsgeräte bzw. Zusatzgeräte eine Datenkommunikation mit dem Koordinatorgerät KG ausführen, ohne dass zwischen ihnen eine Störung der Datenkommunikation auftritt.

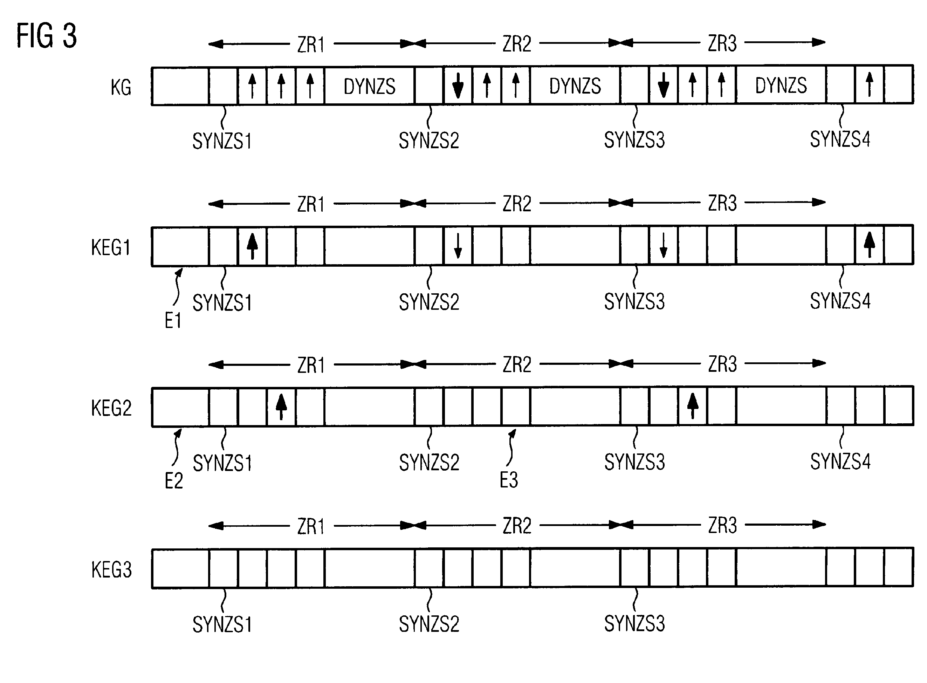

Die Figur 3 zeigt eine Datenkommunikation zwischen einem Koordinatorgerät KG und drei Kommunikationsendgeräten KEG1, KEG2, KEG3 in einer Nutzdatenübertragungsbetriebsart und einer Koordinatorparametrierbetriebsart in drei aufeinanderfolgenden Zeitrahmen ZR1, ZR2, ZR3 und dem Beginn eines vierten Zeitrahmens, der auf den dritten Zeitrahmen ZR3 folgt. Der Aufbau der Zeitrahmen ZR1, ZR2, ZR3 entspricht jeweils dem aus der Figur 2a. An die Synchronisierungszeitschlitze SYNZS1, SYNZS2, SYNZS3 und SYNZS4 schließen sich jeweils drei Nutzdatenübertragungszeitschlitze an, die zur Bewahrung der Übersichtlichkeit in der Figur 3 nicht bezeichnet sind. Die drei Nutzdatenübertragungszeitschlitze sind den drei Kommunikationsendgeräten KEG1, KEG2, KEG3, wie in Figur 2a beschrieben, vom Koordinatorgerät KG zugewiesen.

Zunächst wird die Datenkommunikation zwischen dem Koordinatorgerät KG und dem ersten Kommunikationsendgerät KEG1 näher erläutert.

Vor dem ersten Zeitrahmen ZR1 findet ein Ereignis E1 statt, welches vom ersten Kommunikationsendgerät KEG1 registriert wird. Dieses Ereignis E1 könnte beispielsweise das Überschreiten einer Temperaturschwelle, die Erkennung eines Brandes etc. sein, jedenfalls etwas was z.B. von einem als Sensor ausgebildeten Kommunikationsendgerät KEG1 erkannt wird und was infolge festgelegter Verarbeitungsrichtlinien im Sensor dem Koordinatorgerät KG gemeldet werden muss.

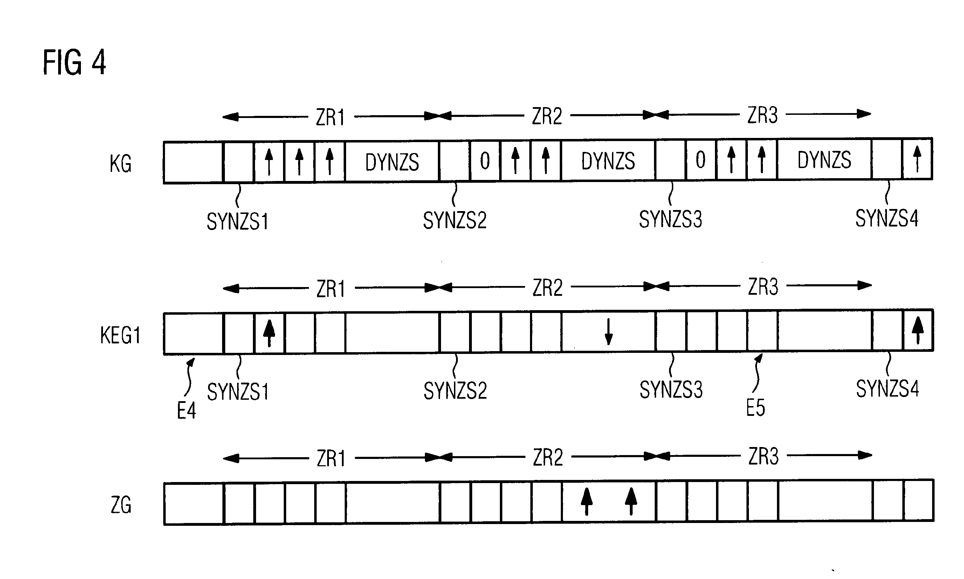

Damit eine Meldung an das Koordinatorgerät KG erfolgen kann, muss sich das erste Kommunikationsendgerät KEG1 auf die nächste Synchronisierungsmeldung im Synchronisierungszeitschlitz SYNZS1 aufsynchronisieren. Dazu stellt das erste Kommunikationsendgerät KEG1 durch Auswertung der Synchronisierungsmeldung fest, dass es sich in einer Nutzdatenübertragungsbetriebsart befindet, also im auf den Synchronisierungszeitschlitz folgenden vom Koordinatorgerät KG zugewiesenen Nutzdatenübertragungszeitschlitz Daten an das Koordinatorgerät KG versenden kann. Dieses wird in der Figur 3 und später auch in Figur 4 dadurch dargestellt, dass in dem Nutzdatenübertragungszeitschlitz NDÜZS1 ein dicker Pfeil dargestellt ist. Dicke Pfeile in den Nutzdatenübertragungszeitschlitzen NDÜZS1, NDÜZS2, NDÜZS3 stellen im Weiteren gesendete Meldungen dar. Dünne Pfeile in den Nutzdatenübertragungszeitschlitzen NDÜZS1, NDÜZS2, NDÜZS3 der Kommunikationsendgeräte KEG1, KEG2, KEG3 stellen im Weiteren empfangene Meldungen dar. Dünne Pfeile in den Nutzdatenübertragungszeitschlitzen NDÜZS1, NDÜZS2, NDÜZS3 des Koordinatorgerätes KG stellen im weiteren empfangene Meldungen dar, wenn in entsprechenden Nutzdatenübertragungszeitschlitzen NDÜZS1, NDÜZS2, NDÜZS3 Meldungen von den Kommunikationsendgeräten KEG1, KEG2, KEG3 gesendet wurden, oder Empfangsbereitschaft des Koordinatorgerätes KG, wenn in entsprechenden Nutzdatenübertragungszeitschlitzen NDÜZS1, NDÜZS2, NDÜZS3 keine Meldungen von den Kommunikationsendgeräten KEG1, KEG2, KEG3 gesendet wurden. Befinden sich in den Nutzdatenübertragungszeitschlitzen NDÜZS1, NDÜZS2, NDÜZS3 keine Pfeile, soll dargestellt sein, dass in diesen Nutzdatenübertragungszeitschlitzen NDÜZS1, NDÜZS2, NDÜZS3 keine Meldungen von den Kommunikationsendgeräten KEG1, KEG2, KEG3 zum Koordinatorgerät KG gesendet werden.

Im Nutzdatenübertragungszeitschlitz NDÜZS1 des Zeitrahmens ZR1 sendet also das Kommunikationsendgerät KEG1 eine Meldung an das Koordinatorgerät KG. Durch die Aufsynchronisierung des Kommunikationsendgerätes KEG1 auf die Synchronisierungsmeldung im zweiten Synchronisierungszeitschlitz SYNZS2 des Zeitrahmens ZR2 erhält das Kommunikationsendgerät KEG1 die Mitteilung, dass es von der Nutzdatenübertragungsbetriebsart in die Koordinatorparametrierbetriebsart wechseln soll, in der das Kommunikationsendgerät KEG1 vom Koordinatorgerät KG im Nutzdatenübertragungszeitschlitz NDÜZS1 des zweiten Zeitrahmens ZR2 eine Parametriermeldung empfängt. Die Übertragung der Parametriermeldung kann aufgrund der Datenmenge jedoch nicht in einem einzigen Nutzdatenübertragungszeitschlitz abgeschlossen werden. Wenn sich jetzt das Kommunikationsendgerät KEG1 auf die Synchronisierungsmeldung im dritten Synchronisierungszeitschlitz SYNZS3 des dritten Zeitrahmens ZR3 aufsynchronisiert, erhält es die Mitteilung dass die Koordinatorparametrierbetriebsart aufrechterhalten werden soll. Das Kommunikationsendgerät KEG1 empfängt nun vom Koordinatorgerät KG im Nutzdatenübertragungszeitschlitz NDÜZS1 des dritten Zeitrahmens ZR3 den zweiten Teil der Parametriermeldung, die jetzt im Nutzdatenübertragungszeitschlitz NDÜZS1 des dritten Zeitrahmens ZR3 vollständig übertragen werden konnte.

Parametriermeldungen, die das Kommunikationsendgerät KEG1 in der Koordinatorparametrierbetriebsart vom Koordinatorgerät KG erhält, werden vom Kommunikationsendgerät KEG1 optional in einem darauffolgenden zugewiesenen Nutzdatenübertragungszeitschlitz durch eine Bestätigungsmeldung BM bestätigt. Es ist parametrierbar, wie viele vom ersten Kommunikationsendgerät KEG1 korrekt empfangene Parametriermeldungen mit einer Bestätigungsmeldung BM bestätigt werden. Dadurch ist es möglich, sowohl jede Parametriermeldung separat als auch Blöcke von Parametriermeldungen mit einer Bestätigungsmeldung BM zu bestätigen. Bestätigungsmeldungen (BM), die jeweils einen Block von Parametriermeldungen bestätigen, reduzieren bei guter Datenverbindung nur minimal den Datendurchsatz.

Wenn sich jetzt das Kommunikationsendgerät KEG1 auf die Synchronisierungsmeldung im vierten Synchronisierungszeitschlitz SYNZS4 des vierten Zeitrahmens aufsynchronisiert, erhält es die Mitteilung dass es von der Koordinatorparametrierbetriebsart wieder in die Nutzdatenübertragungsbetriebsart wechseln soll. Das Kommunikationsendgerät KEG1 sendet nun im Nutzdatenübertragungszeitschlitz NDÜZS1 des vierten Zeitrahmens Meldungen (Nutzdaten) an das Koordinatorgerät KG.

Jetzt wird die Datenkommunikation zwischen dem Koordinatorgerät KG und dem zweiten Kommunikationsendgerät KEG2 näher erläutert.

Infolge eines Ereignisses E2 vor dem ersten Zeitrahmen ZR1 und nach erfolgter Aufsynchronisierung des zweiten Kommunikationsendgerätes KEG2 auf die Synchronisierungsmeldung SYNM im ersten Synchronisierungszeitschlitz SYNZS1 des ersten Zeitrahmens ZR1 sendet das zweite Kommunikationsendgerät KEG2 im Nutzdatenübertragungszeitschlitz NDÜZS2 des Zeitrahmens ZR1 eine Meldung an das Koordinatorgerät KG, die in diesem Nutzdatenübertragungszeitschlitz NDÜZS2 des ersten Zeitrahmens ZR1 vollständig übertragen werden konnte.

Damit das Funkkommunikationssystem FKS energiesparsam betrieben werden kann und wenn dem zweiten Synchronisierungszeitschlitz SYNZS2 des zweiten Zeitrahmens ZR2 kein erneutes Ereignis vorangeht, betreibt das zweite Kommunikationsendgerät KEG2 keine Aufsynchronisierung auf die Synchronisierungsmeldung SYNM des zweiten Synchronisierungszeitschlitzes SYNZS2 des zweiten Zeitrahmens ZR2 sondern verweilt im energiesparenden Schlafmodus. Konnte jedoch, was in der Figur 3 nicht gezeigt ist, die Meldung im Nutzdatenübertragungszeitschlitz NDÜZS2 des Zeitrahmens ZR1 an das Koordinatorgerät KG nicht vollständig übertragen werden, würde sich das zweite Kommunikationsendgerät KEG2 auf die Synchronisierungsmeldung SYNM des zweiten Synchronisierungszeitschlitzes SYNZS2 des zweiten Zeitrahmen ZR2 aufsynchronisieren und im zweiten Nutzdatenübertragungszeitschlitz NDÜZS2 des zweiten Zeitrahmens den noch nicht übertragenen Teil der Meldung an das Koordinatorgerät KG übertragen.

Nach dem zweiten Synchronisierungszeitschlitz SYNZS2 des zweiten Zeitrahmens ZR2 findet jedoch wiederum ein Ereignis E3 statt, welches vom zweiten Kommunikationsendgerät KEG2 registriert wird und an das Koordinatorgerät KG gemeldet werden muss. Um dieses zu realisieren, synchronisiert sich das zweite Kommunikationsendgerät KEG2 auf die Synchronisierungsmeldung SYNM des dritten Synchronisierungszeitschlitzes SYNZS3 im dritten Zeitrahmen ZR3 auf und überträgt im zweiten Nutzdatenübertragungszeitschlitz NDÜZS2 des dritten Zeitrahmens ZR3 eine Meldung (Nutzdaten) an das Koordinatorgerät KG, die wiederum im zweiten Nutzdatenübertragungszeitschlitz NDÜZS2 des dritten Zeitrahmens ZR3 vollständig übertragen werden konnte.

Danach verweilt das zweite Kommunikationsendgerät KEG2 wiederum im energiesparenden Schlafmodus, wie er bereits im Hinblick auf den zweiten Zeitrahmen ZR2 beschrieben wurde, bis erneut ein Ereignis auftritt.

Zwischen dem Koordinatorgerät KG und dem dritten Kommunikationsendgerät KEG3 findet keine Datenkommunikation statt. Das dritte Kommunikationsendgerät KEG3 verweilt im energiesparenden Schlafmodus.

Die Figur 4 zeigt eine Datenkommunikation zwischen einem Koordinatorgerät KG, einem ersten Kommunikationsendgerät KEG1 und einem Zusatzgerät ZG in einer Nutzdatenübertragungsbetriebsart und einer Ad-hoc-Parametrierbetriebsart. Aufbau und Darstellung entsprechen denen der Figur 3 sofern nicht Änderungen spezifiziert sind.

Infolge eines Ereignisses E4 vor dem ersten Zeitrahmen ZR1 und nach erfolgter Aufsynchronisierung des ersten Kommunikationsendgerätes KEG1 auf die Synchronisierungsmeldung SYNM im ersten Synchronisierungszeitschlitz SYNZS1 des ersten Zeitrahmens ZR1 sendet das erste Kommunikationsendgerät KEG1 im Nutzdatenübertragungszeitschlitz NDÜZS1 des Zeitrahmens ZR1 eine Meldung an das Koordinatorgerät KG, die in diesem Nutzdatenübertragungszeitschlitz NDÜZS1 des ersten Zeitrahmens ZR1 vollständig übertragen werden konnte.

Dem zweiten Synchronisierungszeitschlitz SYNZS2 des zweiten Zeitrahmens ZR2 geht kein erneutes Ereignis voran. Das erste Kommunikationsendgerät KEG1 betreibt deshalb keine Aufsynchronisierung auf die Synchronisierungsmeldung SYNM des zweiten Synchronisierungszeitschlitzes SYNZS2 des zweiten Zeitrahmens ZR2 sondern verweilt im energiesparenden Schlafmodus.

Im dynamischen Zeitschlitz DYNZS des ersten Zeitrahmens ZR1 signalisiert jedoch das Zusatzgerät ZG, dem kein Nutzdatenübertragungszeitschlitz zugewiesen ist, dem Koordinatorgerät KG mittels einer Zusatzgerätparametrierungsmeldung, dass es das erste Kommunikationsendgerät KEG1 in einer Ad-hoc-Parametrierbetriebsart parametrieren will. Das Koordinatorgerät KG zwingt daraufhin das erste Kommunikationsendgerät KEG1 mittels der Synchronisierungsmeldung SYNM im zweiten Synchronisierungszeitschlitz SYNZS2 des zweiten Zeitrahmens ZR2 in die Ad-hoc-Parametrierbetriebsart zu wechseln. Der erste Nutzdatenübertragungszeitschlitz NDÜZS1 des zweiten Zeitrahmens ZR2 im Koordinatorgerät KG wird deshalb für den Empfang von Meldungen nicht verwendet, was durch die 0 in der Figur 4 repräsentiert werden soll.

Das Zusatzgerät ZG sendet daraufhin im zweiten dynamischen Zeitschlitz DYNZS des zweiten Zeitrahmens ZR2 eine Parametriermeldung an das erste Kommunikationsendgerät KEG1 über einen Funkkanal, der die Datenkommunikation zwischen dem Koordinatorgerät KG und den nicht vom Zusatzgerät ZG parametrierten Kommunikationsendgeräten nicht stört.

Das erste Kommunikationsendgerät KEG1 sendet daraufhin im zweiten dynamischen Zeitschlitz DYNZS des zweiten Zeitrahmens ZR2 eine Antwortmeldung an das Zusatzgerät ZG. Das Zusatzgerät ZG signalisiert dem ersten Kommunikationsendgerät KEG1 mittels einer Zusatzgerätparametrierungsbeendigungsmeldung, dass das erste Kommunikationsendgerät KEG1 die Ad-hoc-Parametrierbetriebsart wieder verlassen soll. Der erste Nutzdatenübertragungszeitschlitz NDÜZS1 des dritten Zeitrahmens ZR3 wird jedoch im Koordinatorgerät KG für den Empfang von Meldungen nicht verwendet.

Infolge eines Ereignisses E5 vor dem vierten Synchronisierungszeitschlitz SYNZS4 synchronisiert sich das erste Kommunikationsendgerät KEG1 wieder auf die Synchronisierungsmeldung SYNM im vierten Synchronisierungszeitschlitz SYNZS4 auf und das erste Kommunikationsendgerät KEG1 sendet im Nutzdatenübertragungszeitschlitz NDÜZS1 des vierten Zeitrahmens (nicht in der Figur 4 vollständig dargestellt und bezeichnet) eine Meldung an das Koordinatorgerät KG.

Selbstverständlich (was in der Figur 4 nicht gezeigt) ist, könnte das Kommunikationsendgerät KEG1 infolge der Aufsynchronisierung auf den Synchronisierungszeitschlitz SYNZS3 auch bereits im Nutzdatenübertragungszeitschlitz NDÜZS1 des dritten Zeitrahmens ZR3 eine Meldung an das Koordinatorgerät KG senden. Auch kann sich die Parametrierung des ersten Kommunikationsendgerätes KEG1 durch das Zusatzgerät ZG über mehrere dynamische Zeitschlitze DYNZS erstrecken und die Antwort des ersten Kommunikationsendgerätes KEG1 auf eine Parametriermeldung des Zusatzgerätes ZG muss nicht zwangsläufig in demselben dynamischen Zeitschlitz DYNZS erfolgen.

In den Figuren 3 und 4 senden die Kommunikationsendgeräte KEG1, KEG2 Meldungen (Nutzdaten) infolge von aufgetretenen Ereignissen E1, E2, E3, E4, E5. Treten jedoch für einen längeren Zeitraum keine Ereignisse auf, verweilen die Kommunikationsendgeräte im energiesparenden Schlafmodus.

Dem Koordinatorgerät KG bleibt dann über einen längeren Zeitraum unbekannt, ob ein Kommunikationsendgerät noch einwandfrei im Betrieb ist bzw. bereits ausgefallen ist. So ein ausgefallenes Kommunikationsendgerät wäre für die Parametrierung oder Diagnose nicht erreichbar. Das Funkkommunikationssystem FKS kann daher auch so parametriert sein, dass die Kommunikationsendgeräte unabhängig vom Auftreten eines Ereignisses in vorbestimmten Zeitabständen in zugewiesenen Nutzdatenübertragungszeitschlitzen eine Statusmeldung an das Koordinatorgerät KG versenden müssen. Das Ausbleiben der Statusmeldung zeigt den Ausfall des Kommunikationsendgerätes an. In der Statusmeldung können auch Diagnoseinformationen enthalten sein.

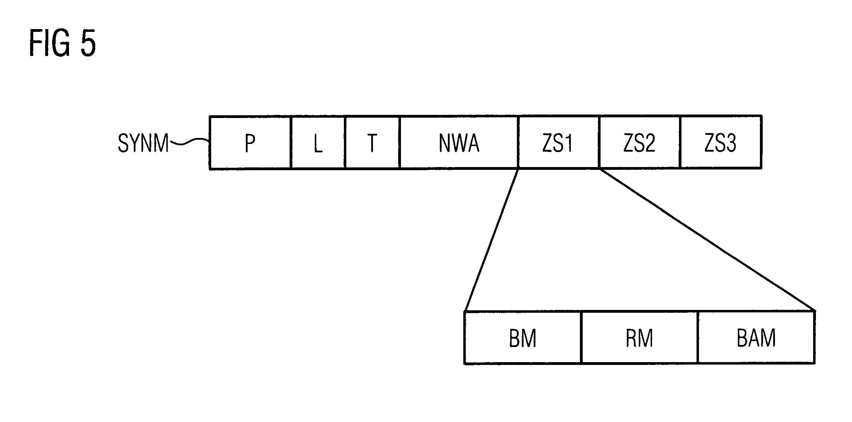

Die Figur 5 zeigt die Strukturierung einer in einem Synchronisierungszeitschlitz übertragenen Synchronisierungsmeldung SYNM. Die Synchronisierungsmeldung SYNM besteht aus einem ersten Abschnitt umfassend ein Präambelbitmuster P zur Zeitsynchronisierung, Vorgaben zur Rahmenlänge L, Vorgaben zum Rahmentyp T und eine Netzwerkadresse NWA (eine Netzwerkadresse mit dem Umfang von 8 Bit lässt 256 Netzwerke unterscheiden, was in der Praxis von Industriehallen oder -anlagen ausreichend ist) sowie einem zweiten Abschnitt zur Steuerung der den drei Kommunikationsendgeräten KEG1, KEG2, KEG3 zugewiesenen Zeitschlitze ZS1, ZS2, ZS3. Die Steuermeldung (2. Abschnitt) betreffend den Zeitschlitz ZS1 ist beispielhaft erläutert und umfasst einen ersten Teil BM, mit das Koordinatorgerät KG dem ersten Kommunikationsendgerät KEG1 anzeigt, ob eine vorangegangene vom ersten Kommunikationsendgerät KEG1 gesendete Meldung oder auch eine Vielzahl davon korrekt vom Koordinatorgerät KG empfangen wurde oder nicht bzw. ob eine Bestätigung vom ersten Kommunikationsendgerät KEG1 gefordert wird, einen zweiten Teil RM, der die Richtung der Datenkommunikation zwischen Koordinatorgerät KG und erstem Kommunikationsendgerät KEG1 innerhalb dieses Zeitrahmens festlegt und einen dritten Teil BAM, der dem ersten Kommunikationsendgerät KEG1 signalisiert, in welcher Betriebsart das erste Kommunikationsendgerät KEG1 in diesem Zeitrahmen betrieben wird.

Im einfachsten Fall ist für jeden Teil BM, RM, BAM der Steuermeldung ein Bit vorgesehen, also insgesamt 3 Bit. Der Bitwert 0 des ersten Teils BM zeigt dem ersten Kommunikationsendgerät KEG1 an, dass eine vorangegangene vom ersten Kommunikationsendgerät KEG1 gesendete Meldung oder auch eine Vielzahl davon korrekt vom Koordinatorgerät KG empfangen wurde, der Bitwert 0 des zweiten Teils fordert einen Sendebetrieb durch das erste Kommunikationsendgerät KEG1 und einen Empfangsbetrieb durch das Koordinatorgerät KG und der Bitwert 0 des dritten Teils fordert den Betrieb des ersten Kommunikationsendgerätes KEG1 in der Nutzdatenübertragungsbetriebsart bzw. Koordinatorparametrierbetriebsart. Umgekehrt zeigt der Bitwert 1 des ersten Teils BM dem ersten Kommunikationsendgerät KEG1 an, dass keine vorangegangene vom ersten Kommunikationsendgerät KEG1 gesendete Meldung oder auch eine Vielzahl davon korrekt vom Koordinatorgerät KG empfangen wurde, der Bitwert 1 des zweiten Teils fordert einen Empfangsbetrieb durch das erste Kommunikationsendgerät KEG1 und einen Sendebetrieb durch das Koordinatorgerät KG und der Bitwert 1 des dritten Teils fordert den Wechsel des ersten Kommunikationsendgerätes KEG1 in eine Ad-hoc-Parametrierbetriebsart.

Ob der korrekte Empfang von Meldungen des ersten Kommunikationsendgerätes KEG1 durch das Koordinatorgerät KG bestätigt werden muss, ist vorab in der Koordinatorparametrierbetriebsart festzulegen. Um die Latenzzeit in der Nutzdatenübertragungsbetriebsart zu minimieren, wird vom Koordinatorgerät KG jede im vorangegangenen Nutzdatenübertragungszeitschlitz vom ersten Kommunikationsendgerät KEG1 versendete und vom Koordinatorgerät korrekt empfangene Meldung, im nachfolgenden Synchronisierungszeitschlitz in der Synchronisierungsmeldung SYNM bestätigt. Wenn diese Meldung jedoch nicht korrekt vom Koordinatorgerät KG empfangen wurde, erfolgt keine Bestätigungsmeldung BM durch das Koordinatorgerät KG.

Wenn das Koordinatorgerät KG in diesem Fall keine Bestätigungsmeldung BM versendet, muss das erste Kommunikationsendgerät KEG1, die zuletzt gesendete Meldung im folgenden Nutzdatenübertragungszeitschlitz erneut an das Koordinatorgerät KG versenden.

Wie vorstehend beschrieben können einzelne Meldungen im Funkkommunikationssystem FKS durch Anweisungen an die Kommunikationsendgeräte KEG1, KEG2, KEG3 in den Synchronisierungsmeldungen verschlüsselt werden. Alternativ dazu können auch alle Meldungen verschlüsselt werden. Da jedes Funkkommunikationssystem FKS einen eigenen Schlüssel erhält, muss keine separate Netzwerkadresse verwendet werden. Kann eine Meldung entschlüsselt werden, stammt sie von einem Kommunikationsendgerät KEG1, KEG2, KEG3 des Funkkommunikationssystems FKS.

Zusammenfassend sollen nochmals die Vorteile des Funkkommunikationssystems FKS erläutert werden:
1. Separate Betriebsarten
   a) für das Übertragen von Meldungen (Prozesswerten) in der Nutzdatenübertragungsbetriebsart,
   b) für die Parametrierung von Kommunikationsendgeräten durch das Koordinatorgerät in der Koordinatorparametrierbetriebsart, und
   c) für die Parametrierung von Kommunikationsendgeräten durch das Zusatzgerät in der Ad-hoc-Parametrierbetriebsart,
      wodurch folgende Vorteile erzielt werden:
   d) Geringe Latenzzeit für die Übertragung von Prozesswerten
   e) Parametrierung von Kommunikationsendgeräten in der Koordinatorparametrierbetriebsart und der Ad-hoc-Parametrierbetriebsart ohne negativen Einfluss auf die Latenzzeit.
2. Keine Parametrierung von Kommunikationsendgeräten durch das Zusatzgerät in der Nutzdatenübertragungsbetriebsart, wodurch folgende Vorteile erzielt werden:
   a) Parametrierung durch das Zusatzgerät ohne negativen Einfluss auf die Latenzzeit,
   b) Für die Parametrierung durch das Zusatzgerät steht die volle Bandbreite eines Funkkanals zur Verfügung.
3. Information über die Betriebsart der Kommunikationsendgeräte in der Synchronisierungsmeldung, wodurch folgende Vorteile erzielt werden:
   a) Die Kommunikationsendgeräte können in verschiedene Betriebsarten versetzt werden
   b) Der Wechsel zwischen den Betriebsarten ist mit minimaler Latenzzeit möglich.
4. Beinhaltung des Erfordernisses der Versendung einer Bestätigungsmeldung durch die Kommunikationsendgeräte in der Synchronisierungsmeldung, wodurch folgender Vorteil erzielt wird:
   Länge der Zeitschlitze und damit der Latenzzeit kann minimiert werden.
5. Beinhaltung von Richtungsinformation in der Synchronisierungsmeldung, wodurch folgende Vorteile erzielt werden:
   a) Das Koordinatorgerät kann die Richtung der Datenkommunikation zu den Kommunikationsendgeräten separat umschalten,
   b) es wird kein separater Funkkanal für die Richtung vom Koordinatorgerät zum Kommunikationsendgerät benötigt, welcher die Latenzzeit vergrößern würde.
6. Die Anzahl und Länge der Zeitschlitze ist frei parametrierbar, wodurch folgender Vorteil erzielt wird:
   Das Funkkommunikationssystem kann sowohl für minimale Latenzzeit bei wenigen Teilnehmern (Kommunikationsendgeräten) als auch für viele Teilnehmer bei erhöhter Latenzzeit optimiert werden.

Die Erfindung ist nicht auf die speziellen Ausführungsbeispiele beschränkt, sondern schließt weitere nicht explizit offenbarte Abwandlungen mit ein, solange von dem Kern der Erfindung Gebrauch gemacht wird.

## Patentansprüche

1. Funkkommunikationssystem (FKS) umfassend ein Koordinatorgerät (KG) und mindestens ein Kommunikationsendgerät (KEG1, KEG2, KEG3), in dem der Zugriff auf die Funkressource nach dem Zeitmultiplexverfahren strukturiert ist,
a) wobei die Funkressource in determinierte Zeitrahmen (ZR, ZR1, ZR2, ZR3) unterteilt ist,
b) wobei das Koordinatorgerät (KG) dem mindestens einen Kommunikationsendgerät (KEG1, KEG2, KEG3) mindestens einen Nutzdatenübertragungszeitschlitz (NDÜZS1, NDÜZS2, NDÜZS3) zuweist, dessen zeitliche Position in aufeinanderfolgenden Zeitrahmen (ZR, ZR1, ZR2, ZR3) in Bezug auf den Beginn des jeweiligen Zeitrahmens (ZR, ZR1, ZR2, ZR3) determiniert ist,
c) die einzelnen Zeitrahmen (ZR, ZR1, ZR2, ZR3) dergestalt strukturiert sind, dass sie einen Synchronisierungszeitschlitz (SYNZS, SYNZS1, SYNZS2, SYNZS3, SYNZS4), ein oder mehrere Nutzdatenübertragungszeitschlitze (NDÜZS1, NDÜZS2, NDÜZS3) gleicher Länge und einen weiteren dynamischen Zeitschlitz (DYNZS) beinhalten,
**dadurch genennzeichnet, dass**
d) der dynamische Zeitschlitz (DYNZS) von einem Kommunikationsendgerät (KEG1, KEG2, KEG3) benutzbar ist, dem kein Nutzdatenübertragungszeitschlitz (NDÜZS1, NDÜZS2, NDÜZS3) zugewiesen ist, und/oder von einem Zusatzgerät (ZG) benutzbar ist,
e) das Zusatzgerät (ZG) dem Koordinatorgerät (KG) mittels einer Zusatzgerätparametrierungsmeldung signalisiert, dass es das mindestens eine Kommunikationsendgerät (KEG1, KEG2, KEG3) in einer Ad-hoc-Parametrierbetriebsart parametrieren will und das Koordinatorgerät (KG) daraufhin das mindestens eine Kommunikationsendgerät (KEG1, KEG2, KEG3) mittels der Synchronisierungsmeldung (SYNM) zwingt, in die Ad-hoc-Parametrierbetriebsart zu wechseln.

2. Funkkommunikationssystem (FKS) gemäß Patentanspruch 1,
**dadurch gekennzeichnet , dass** das Koordinatorgerät (KG) dem mindestens einen Kommunikationsendgerät (KEG1, KEG2, KEG3) in einer Nutzdatenübertragungsbetriebsart mittels einer im Synchronisierungszeitschlitz (SYNZS, SYNZS1, SYNZS2, SYNZS3, SYNZS4) übertragenen Synchronisierungsmeldung (SYNM) mitteilt, in welcher Richtung die Funkkommunikation zwischen dem Koordinatorgerät (KG) und dem mindestens einen Kommunikationsendgerät (KEG1, KEG2, KEG3) innerhalb dieses Zeitrahmens (ZR, ZR1, ZR2, ZR3) erfolgt.

3. Funkkommunikationssystem (FKS) gemäß Patentanspruch 2,
**dadurch gekennzeichnet , dass** die Synchronisierungsmeldung (SYNM) als Richtung die Abwärtsrichtung vom Koordinatorgerät (KG) zu dem mindestens einen Kommunikationsendgerät (KEG1, KEG2, KEG3) definiert, und daraufhin das mindestens eine Kommunikationsendgerät (KEG1, KEG2, KEG3) und das Koordinatorgerät (KG) in eine Koordinatorparametrierbetriebsart wechseln, in der das mindestens eine Kommunikationsendgerät (KEG1, KEG2, KEG3) parametriert wird.

4. Funkkommunikationssystem (FKS) gemäß einem der vorstehenden Patentansprüche,
**dadurch gekennzeichnet, dass** das Koordinatorgerät (KG) dem mindestens einen Kommunikationsendgerät (KEG1, KEG2, KEG3) in der Nutzdatenübertragungsbetriebsart mittels der im Synchronisierungszeitschlitz (SYNZS, SYNZS1, SYNZS2, SYNZS3, SYNZS4) übertragenen Synchronisierungsmeldung (SYNM) mitteilt, ob eine Bestätigung empfangener Meldungen erforderlich ist.

5. Funkkommunikationssystem (FKS) gemäß einem der vorstehenden Patentansprüche,
**dadurch gekennzeichnet , dass** der dynamische Zeitschlitz (DYNZS) eines Zeitrahmens (ZR, ZR1, ZR2, ZR3) in mehrere Unterzeitschlitze (UZS1, USZ2) gleicher Länge unterteilt ist.

6. Funkkommunikationssystem (FKS) gemäß einem der vorstehenden Patentansprüche,
**dadurch gekennzeichnet, dass** das Zusatzgerät (ZG) dem mindestens einen Kommunikationsendgerät (KEG1, KEG2, KEG3) mittels einer Zusatzgerätparametrierungsbeendigungsmeldung signalisiert, dass es die Ad-hoc-Parametrierbetriebsart verlassen soll, wodurch das mindestens eine Kommunikationsendgerät (KEG1, KEG2, KEG3) gezwungen wird, sich wiederum auf die Synchronisierungsmeldung (SYNM) zu synchronisieren, um mit dem Koordinatorgerät (KG) zu kommunizieren.

7. Funkkommunikationssystem (FKS) gemäß einem der vorstehenden Patentansprüche,
**dadurch gekennzeichnet, dass** das mindestens eine Kommunikationsendgerät (KEG1, KEG2, KEG3) in der Nutzdatenübertragungsbetriebsart im energiesparenden Schlafmodus verweilt und sich erst nach Auftreten eines Ereignisses (E1, E2, E3, E4, E5) auf die Synchronisierungsmeldung (SYNM) synchronisiert und im Zeitrahmen (ZR, ZR1, ZR2, ZR3) dieser Synchronisierungsmeldung (SYNM) eine Meldung im zugewiesenen Nutzdatenübertragungszeitschlitz (NDÜZS1, NDÜZS2, NDÜZS3) an das Koordinatorgerät (KG) versendet.

8. Funkkommunikationssystem (FKS) nach einem der Patentansprüche 1 bis 6,
**dadurch gekennzeichnet, dass** das mindestens eine Kommunikationsendgerät (KEG1, KEG2, KEG3) in der Nutzdatenübertragungsbetriebsar.t in vorbestimmten Zeitrahmen (ZR, ZR1, ZR2, ZR3) in einem zugewiesenen Nutzdatenübertragungszeitschlitz (NDÜZS1, NDÜZS2, NDÜZS3) eine Statusmeldung an das Koordinatorgerät (KG) versendet.

9. Funkkommunikationssystem (FKS) nach einem der vorstehenden Patentansprüche,
**dadurch gekennzeichnet , dass** ein oder mehrere der folgenden Größen parametrierbar sind:
- Zeitdauer der Synchronisierungszeitschlitze (SYNZS, SYNZS1, SYNZS2, SYNZS3, SYNZS4),
- Anzahl der dem mindestens einen Kommunikationsendgerät (KEG1, KEG2, KEG3) zugewiesenen Nutzdatenübertragungszeitschlitze (NDÜZS1, NDÜZS2, NDÜZS3) innerhalb eines Zeitrahmens (ZR, ZR1, ZR2, ZR3),
- Anzahl des mindestens einen Kommunikationsendgerätes (KEG1, KEG2, KEG3),
- Zeitdauer der Nutzdatenübertragungszeitschlitze (NDÜZS1, NDÜZS2, NDÜZS3),
- Zeitdauer des dynamischen Zeitschlitzes (DYNZS) und die Anzahl und Zeitdauer der Unterzeitschlitze (UZS1, UZS2),
- Verschlüsselungserfordernis der zu übertragenen Meldungen.

10. Koordinatorgerät (KG) ausgebildet für ein Funkkommunikationssystem (FKS) gemäß einem der vorstehenden Patentansprüche.

11. Kommunikationsendgerät (KEG1, KEG2, KEG3) ausgebildet für ein Funkkommunikationssystem (FKS) gemäß einem der vorstehenden Patentansprüche.

## Claims

1. Radio communication system (FKS) comprising a coordinator unit (KG) and at least one communication terminal (KEG1, KEG2, KEG3), in which access to the radio resource is structured in accordance with the time division multiplexing method,
a) with the radio resource being subdivided into determinated time frames (ZR, ZR1, ZR2, ZR3),
b) with the coordinator unit (KG) allocating to the at least one communication terminal (KEG1, KEG2, KEG3) at least one useful data time slot (NDÜZS1, NDÜZS2, NDÜZS3), the temporal position of which in consecutive time frames (ZR, ZR1, ZR2, ZR3) is determined in relation to the beginning of the respective time frame (ZR, ZR1, ZR2, ZR3),
c) the individual time frames (ZR, ZR1, ZR2, ZR3) being structured such that they contain a synchronisation time slot (SYNZS, SYNZS1, SYNZS2, SYNZS3, SYNZS4), one or more useful data transmission time slots (NDÜZS1, NDÜZS2, NDÜZS3) of the same length and a further dynamic time slot (DYNZS),
**characterised in that**
d) the dynamic time slot (DYNZS) is able to be used by a communication terminal (KEG1, KEG2, KEG3) to which no useful data time slot (NDÜZS1, NDÜZS2, NDÜZS3) is allocated and/or is able to be used by an auxiliary device (ZG),
e) the auxiliary device (ZG) signals to the coordinator unit (KG) by means of an auxiliary device parameterisation message that it wishes to parameterise the at least one communication terminal (KEG1, KEG2, KEG3) in an ad-hoc parameterisation operating mode and the coordinator unit (KG) then forces the at least one communication terminal (KEG1, KEG2, KEG3) by means of the synchronisation message (SYNM) to switch over to the ad-hoc parameterisation operating mode.

2. Radio communication system (FKS) according to claim 1,
**characterised in that** the coordinator unit (KG) notifies the at least one communication terminal (KEG1, KEG2, KEG3) in a useful data transmission operating mode by means of a synchronisation message (SYNM) transmitted in a synchronisation time slot (SYNZS, SYNZS1, SYNZS2, SYNZS3, SYNZS4) about the direction in which radio communication is taking place between the coordinator unit (KG) and the at least one communication terminal (KEG1, KEG2, KEG3) within this time frame (ZR, ZR1, ZR2, ZR3).

3. Radio communication system (FKS) according to claim 2,
**characterised in that** the synchronisation message (SYNM) defines the downwards direction from the coordinator unit (KG) to the at least one communication terminal (KEG1, KEG2, KEG3) as the direction, and then the at least one communication terminal (KEG1, KEG2, KEG3) and the coordinator unit (KG) switch over into a coordinator parameterisation operating mode, in which the at least one communication terminal (KEG1, KEG2, KEG3) will be parameterised.

4. Radio communication system (FKS) according to one of the previous claims,
**characterised in that** the coordinator unit (KG) informs the at least one communication terminal (KEG1, KEG2, KEG3) in the useful data transmission operating mode by means of the synchronisation message (SYNM) transmitted in a synchronisation time slot (SYNZS, SYNZS1, SYNZS2, SYNZS3, SYNZS4) whether an acknowledgement of messages received is required.

5. Radio communication system (FKS) according to one of the previous claims,
**characterised in that** the dynamic time slot (DYNZS) of a time frame (ZR, ZR1, ZR2, ZR3) is subdivided into a number of sub- time slots (UZS1, USZ2) of equal length.

6. Radio communication system (FKS) according to one of the previous claims,
**characterised in that** the auxiliary unit (ZG) signals to the at least one communication terminal (KEG1, KEG2, KEG3) by means of an auxiliary unit parameterisation termination message that the terminal is to exit from the ad-hoc parameterisation operating mode, which forces the at least one communication terminal (KEG1, KEG2, KEG3) to synchronise once again to the synchronisation message (SYNM) in order to communicate with the coordinator unit (KG).

7. Radio communication system (FKS) according to one of the previous claims,
**characterised in that** the at least one communication terminal (KEG1, KEG2, KEG3) waits in the useful data transmission operating mode in energy-saving sleep mode and only synchronises itself to the synchronisation message (SYNM) after occurrence of an event (E1, E2, E3, E4, E5) and, in the time frame (ZR, ZR1, ZR2, ZR3) of this synchronisation message (SYNM), sends a message in the allocated useful data time slot (NDÜZS1, NDÜZS2, NDÜZS3) to the coordinator unit (KG).

8. Radio communication system (FKS) according to one of claims 1 to 6,
**characterised in that** the at least one communication terminal (KEG1, KEG2, KEG3), in the useful data transmission operating mode, sends a status message to the coordinator unit (KG) in the predetermined time frame (ZR, ZR1, ZR2, ZR3) in an allocated useful data time slot (NDÜZS1, NDÜZS2, NDÜZS3).

9. Radio communication system (FKS) according to one of the previous claims,
**characterised in that** parameters are able to be set for one or more of the following variables:
- Duration of the synchronisation time slots (SYNZS, SYNZS1, SYNZS2, SYNZS3, SYNZS4),
- Number of useful data transmission time slots (NDÜZS1, NDÜZS2, NDÜZS3) allocated to the at least one communication terminal (KEG1, KEG2, KEG3) within a time frame (ZR, ZR1, ZR2, ZR3),
- Number of the at least one communication terminal (KEG1, KEG2, KEG3),
- Duration of the useful data transmission time slots (NDÜZS1, NDÜZS2, NDÜZS3),
- Duration of the dynamic time slot (DYNZS) and the number and duration of the sub-time slots (UZS1, UZS2),
- Encryption requirement for the messages to be transmitted.

10. Coordinator unit (KG) embodied for a radio communication system (FKS) according to one of the previous claims.

11. Communication terminal (KEG1, KEG2, KEG3) embodied for a radio communication system (FKS) according to one of the previous claims.

## Revendications

1. Système ( FKS ) de radiocommunication comprenant un appareil ( KG ) coordinateur et au moins un terminal ( KEG1, KEG2, KEG3 ) de communication, dans lequel l'accès à la ressource radio est structuré suivant le procédé de multiplexage dans le temps,
a) dans lequel la ressource radio est subdivisée en des trames ( ZR, ZR1, ZR2, ZR3 ) temporelles déterminées,
b) dans lequel l'appareil ( KG ) coordinateur affecte au au moins un terminal ( KEG1, KEG2, KEG3 ) de communication, au moins un créneau ( NDÜZS1, NDÜZS2, NDÜZS3 ) temporel de transmission de données utiles, dont la position dans le temps dans des trames ( ZR, ZR1, ZR2, ZR3 ) temporelles successives est déterminée par rapport au début de la trame ( ZR, ZR1, ZR2, ZR3 ) temporelle respective,
c) les diverses trames ( ZR, ZR1, ZR2, ZR3 ) temporelles sont structurées de manière à contenir un créneau ( SYNZS, SYNZS1, SYNZS2, SYNZS3, SYNZS4 ) temporel de synchronisation, un ou plusieurs créneaux ( NDÜZS1, NDÜZS2, NDÜZS3 ) temporels de transmission de données utiles de même longueur et un autre créneau ( DYNZS ) temporel dynamique.
**caractérisé en ce que**
d) le créneau ( DYNZS ) temporel dynamique peut être utilisé par un terminal ( KEG1, KEG2, KEG3 ) de communication auquel un créneau ( NDÜZS1, NDÜZS2, NDÜZS3 ) temporel de transmission de données utiles n'est pas affecté et/ou peut être utilisé par un appareil ( ZG ) supplémentaire,
e) l'appareil ( ZG ) supplémentaire signale à l'appareil ( KG ) coordinateur, au moyen d'un message de paramétrage d'appareil supplémentaire, qu'il veut paramétrer le au moins un terminal ( KEG1, KEG2, KEG3 ) de communication, dans un type de fonctionnement à paramétrer ad-hoc et sur ce l'appareil ( KG ) coordinateur oblige le au moins un terminal ( KEG1, KEG2, KEG3 ) de communication, au moyen du message ( SYNM ) de synchronisation, à passer dans le type de fonctionnement paramétré ad-hoc.

2. Système ( FKS ) de communication radio suivant la revendication 1, **caractérisé en ce que** l'appareil ( KG ) coordinateur fait part au au moins un terminal ( KEG1, KEG2, KEG3 ) de communication, dans un type de fonctionnement de transmission de données utiles, au moyen d'un message ( SYNM ) de synchronisation transmis dans le créneau ( SYNZS, SYNZS1, SYNZS2, SYNZS3, SYNZS4 ) temporel de synchronisation, du sens dans lequel s'effectue la communication radio entre l'appareil ( KG ) coordinateur et le au moins un terminal ( KEG1, KEG2, KEG3 ) de communication dans cette trame ( ZR, ZR1, ZR2, ZR3 ) temporelle.

3. Système ( FKS ) de communication radio suivant la revendication 2, **caractérisé en ce que** le message ( SYNM ) de synchronisation définit comme sens, le sens descendant allant de l'appareil ( KG ) de coordinateur au au moins un terminal ( KEG1, KEG2, KEG3 ) de communication et sur ce, le au moins un terminal ( KEG1, KEG2, KEG3 ) de communication et l'appareil ( KG ) coordinateur passe dans un type de fonctionnement paramétré de coordinateur, dans lequel le au moins un terminal ( KEG1, KEG2, KEG3 ) de communication est paramétré.

4. Système ( FKS ) de communication radio suivant l'une des revendications précédentes, **caractérisé en ce que** l'appareil ( KG ) coordinateur fait part au au moins un terminal ( KEG1, KEG2, KEG3 ) de communication, dans le type de fonctionnement de transmission de données utiles, au moyen du message ( SYNM ) de synchronisation transmis dans le créneau ( SYNZS, SYNZS1, SYNZS2, SYNZS3, SYNZS4 ) temporel de synchronisation, du point de savoir si une confirmation des messages reçus est nécessaire.

5. Système ( FKS ) de communication radio suivant l'une des revendications précédentes, **caractérisé en ce que** le créneau ( DYNZS ) temporel dynamique d'une trame ( ZR, ZR1, ZR2, ZR3 ) temporelle est subdivisé en plusieurs sous-créneaux ( UZS1, UZS2 ) temporels de même longueur.

6. Système ( FKS ) de communication radio suivant l'une des revendications précédentes, **caractérisé en ce que** l'appareil ( ZG ) supplémentaire signale au au moins un terminal ( KEG1, KEG2, KEG3 ) de communication, au moyen d'un message de fin de paramétrisation de l'appareil supplémentaire, qu'il doit quitter le type de fonctionnement paramétré ad-hoc de sorte que le au moins un terminal ( KEG1, KEG2, KEG3 ) de communication est obligé de se synchroniser à nouveau sur le message ( SYNM ) de synchronisation pour communiquer avec l'appareil ( KG ) coordinateur.

7. Système ( FKS ) de communication radio suivant l'une des revendications précédentes, **caractérisé en ce que** le au moins un terminal ( KEG1, KEG2, KEG3 ) de communication reste dans le type de fonctionnement de transmission de données utiles en mode de sommeil économisant de l'énergie et ne se synchronise sur le message ( SYNM ) de synchronisation qu'après qu'un évènement ( E1, E2, E3, E4, E5 ) est survenu et envoie à l'appareil ( KG ) coordinateur, dans la trame ( ZR, ZR1, ZR2, ZR3 ) de temps de ce message ( SYNM ) de synchronisation, un message dans le créneau ( NDÜZS1, NDÜZS2, NDÜZS3 ) temporel de transmission de données utiles affecté.

8. Système ( FKS ) de communication radio suivant l'une des revendications précédentes, **caractérisé en ce que** le au moins un terminal ( KEG1, KEG2, KEG3 ) de communication envoie, dans le type de fonctionnement de transmission de données utiles, dans des trames ( ZR, ZR1, ZR2, ZR3 ) temporelles déterminées à l'avance, dans un créneau ( NDÜZS1, NDÜZS2, NDÜZS3 ) temporel de transmission de données utiles affecté, un message de statut à l'appareil ( KG ) coordinateur.

9. Système ( FKS ) de communication radio suivant l'une des revendications précédentes, **caractérisé en ce qu'**une ou plusieurs des grandeurs suivantes peuvent être paramétrées :
- durée des créneaux ( SYNZS, SYNZS1, SYNZS2, SYNZS3, SYNZS4 ) temporels de synchronisation,
- nombre des créneaux ( NDÜZS1, NDÜZS2, NDÜZS3 ) temporels de transmission de données utiles affectés au au moins un terminal ( KEG1, KEG2, KEG3 ) de communication dans une trame ( ZR, ZR1, ZR2, ZR3 ) temporelle,
- nombre du au moins un terminal ( KEG1, KEG2, KEG3 ) de communication,
- durée des créneaux ( NDÜZS1, NDÜZS2, NDÜZS3 ) temporels de transmission de données utiles,
- durée du créneau ( DYNES temporel dynamique et nombre et durée des sous-créneaux ( UZS1, UZS2 ) temporels,
- exigence de chiffrement des messages à transmettre.

10. Appareil ( KG ) coordinateur constitué pour système ( FKS ) de communication radio suivant l'une des revendications précédentes.

11. Terminal ( KEG1, KEG2, KEG3 ) de communication constitué pour un système ( FKS ) de communication radio suivant l'une des revendications précédentes.
